# FASCICULE DE BREVET EUROPEEN

(11) **EP 1 173 793 B1**
(45) Date de publication et mention de la délivrance du brevet: **11.12.2002**
(21) Numéro de dépôt: 00922759.6
(22) Date de dépôt: 26.04.2000
(51) Int. Cl.: G02F 1/03

(54) **DISPOSITIF ET PROCEDE DE REGLAGE DU SIGNAL DE COMMANDE D'UN MODULATEUR ELECTRO-OPTIQUE**
VORRICHTUNG UND VERFAHREN ZUM REGELN DES STEUERSIGNALS EINES ELEKTROOPTISCHEN MODULATORS
DEVICE AND METHOD FOR ADJUSTING THE CONTROL SIGNAL OF AN ELECTRO-OPTIC MODULATOR

(30) Priorité: 26.04.1999 FR 9905254
(43) Date de publication de la demande: 23.01.2002
(73) Titulaire: Algety Telecom, 22300 Lannion (FR)
(72) Inventeur: HENRY, Michel, 22300 Lannion (FR)
(74) Mandataire: Texier, Christian
(86) Numéro de dépôt international: FR0001110
(87) Numéro de publication internationale: WO00065403

(56) Documents cités:
- US-A- 3 579 145
- US-A- 5 170 274
- PATENT ABSTRACTS OF JAPAN vol. 1998, no. 06, 30 avril 1998 (1998-04-30) & JP 10 048582 A (MITSUBISHI ELECTRIC CORP), 20 février 1998 (1998-02-20)

## Description

L'invention concerne les dispositifs comportant un émetteur optique (typiquement une diode laser) fonctionnant en régime continu, et un moyen pour moduler la lumière émise par cet émetteur en fonction d'un signal électrique qui représente une information à transmettre typiquement une information numérique. Les applications de ce type de sources se situent notamment dans le domaine de la transmission numérique à haut débit (au delà du Gbit/s) sur fibre optique.

Les modulateurs connus présentent une caractéristique de puissance optique transmise en fonction de la tension de commande, qui tend à varier au cours du temps et à affecter la qualité du signal optique émis.

Plus précisément, cette caractéristique tend à se décaler par rapport à la tension de commande, de sorte qu'il est nécessaire d'adapter régulièrement la tension de commande en fonction de ces décalages.

L'invention se rapporte aux moyens de compensation de ces dérives, aussi bien pour un signal optique de format classique NRZ (non retour à zéro) que pour un signal de format RZ (retour à zéro), qui permet d'utiliser avantageusement les caractéristiques de propagation des fibres optiques. (Un exemple de signal de format RZ est connu sous le nom de soliton).

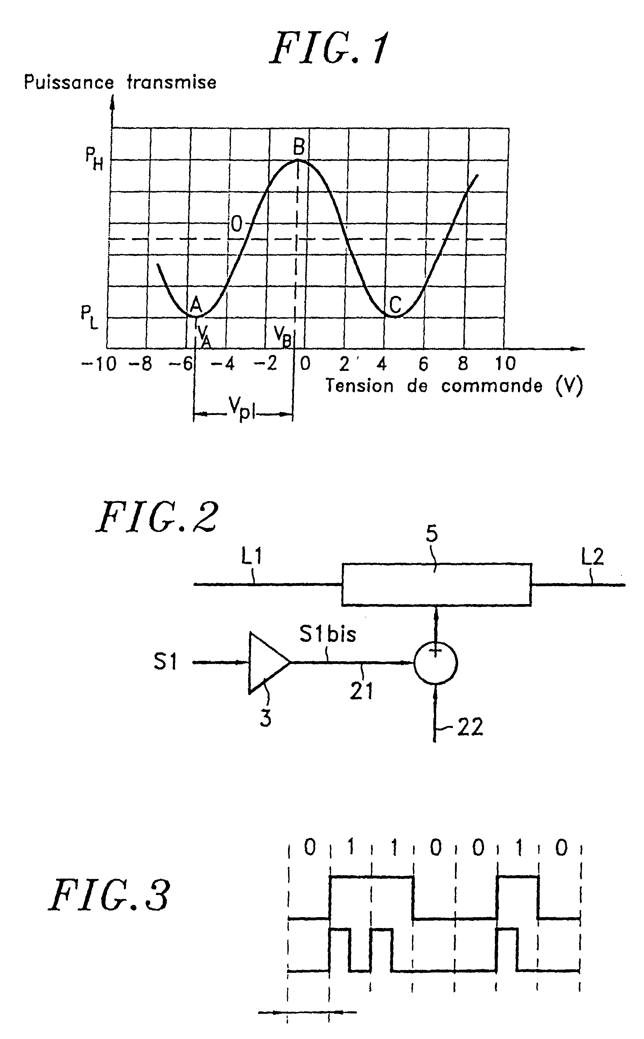

Les modulateurs les plus souvent utilisés, notamment les modulateurs de type interférométriques possèdent une caractéristique sinusoïdale telle que celle représentée à la figure 1. Ils peuvent être réalisés sur niobate de lithium (cas le plus fréquent) ou sur un semi conducteur III-V, ce qui permet l'intégration monolithique avec une diode laser.

Dans les dispositifs classiques, tel que celui représenté à la figure 2, un signal électrique d'information S1 est amplifié par un driver 3 et couplé par capacité à un modulateur 5. Le positionnement du signal de commande par rapport à la caractéristique du modulateur 5 se fait à l'aide d'une tension continue appelée « tension de polarisation », appliquée sur une ligne 22 et additionnée au signal de commande amplifié. L'excursion de tension de commande requise pour passer de la transparence (point B de la caractéristique de la figure 1) à l'extinction (point A la caractéristique) est de quelques Volts. L'onde optique en sortie du modulateur aura des niveaux « 1 » à la puissance PH du point B et des niveaux « 0 » à la puissance PL du point A. Le rapport PH/PL est le taux d'extinction du signal optique, dont il est intéressant qu'il soit le plus élevé possible.

Le signal d'information doit donc avoir une amplitude crête à crête égale à l'amplitude Vpi de la sinusoïde. On souhaite donc ajouter une tension de polarisation de telle sorte que la somme (tension de signal + tension de polarisation) permette d'atteindre les points A et B de la caractéristique.

Pour des raisons de construction du circuit de commande, la tension de polarisation est la valeur moyenne du signal effectivement appliqué sur le modulateur 5.

Il faut donc noter que le point de polarisation optimum dépend de la nature du signal électrique d'information.

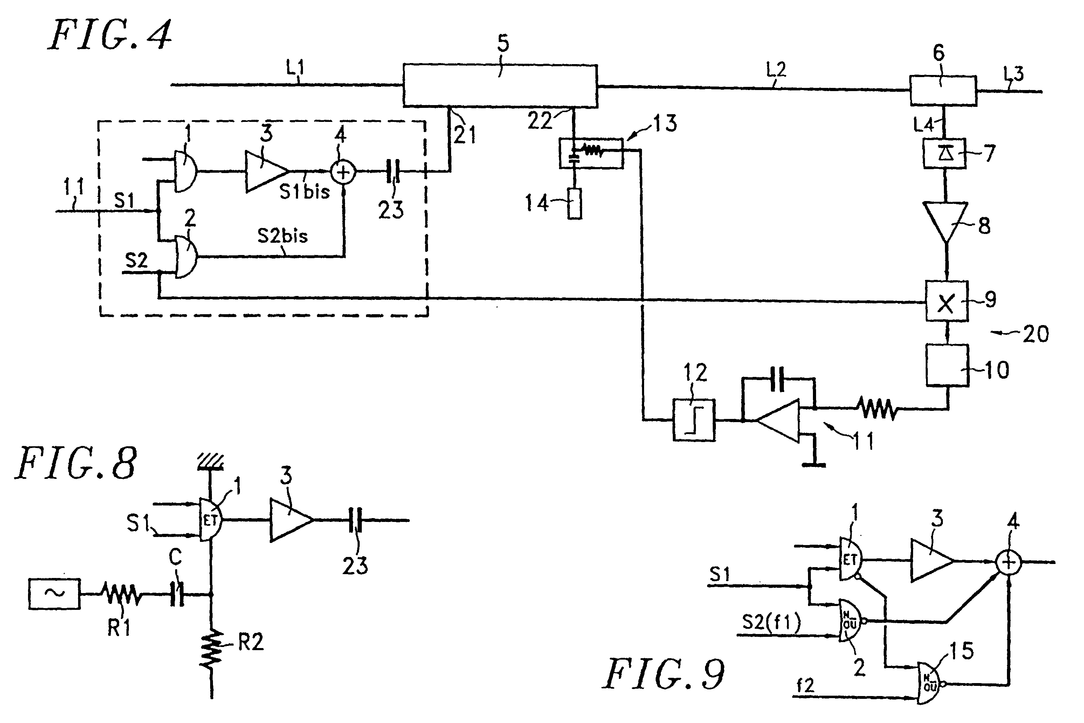

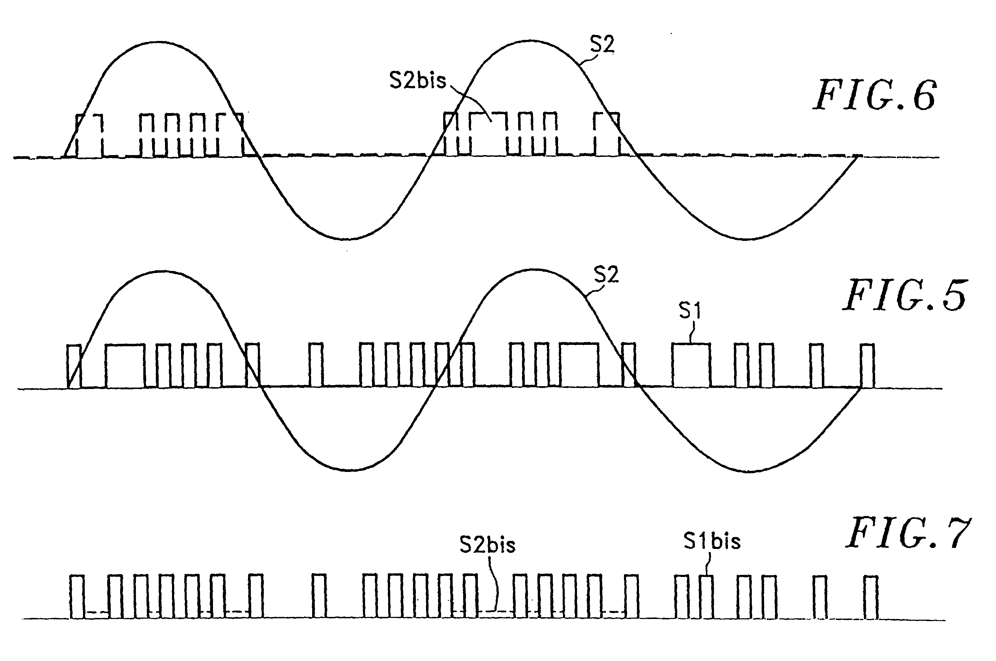

Le cas le plus classique est celui d'un signal numérique dans lequel les « 1 » sont représentés par une impulsion dont la durée est celle du temps bit (100 ps pour 10 Gbit/s), le signal est alors dit de format NRZ ou non retour à zéro. Un exemple d'un tel signal est représenté par le tracé supérieur de la figure 3. Si on suppose que l'amplitude crête à crête du signal de commande est Vpi, et que les « 0 » et les « 1 » sont équiprobables, le point de polarisation optimum se situe au centre de la caractéristique (point O de la figure 1) et la tension de polarisation optimum est (VA + VB)/2.

Dans le cas où les « 1 » sont représentés par une impulsion de durée inférieure au temps bit on parle de signal au format RZ ou retour à zéro. Un exemple d'un tel signal est représenté par le tracé inférieur de la figure 3. Dans ce cas, le rapport entre la tension crête à crête du signal total appliqué et sa valeur moyenne est différent et le point de polarisation optimum n'est plus un point remarquable de la caractéristique. Dans le cas, par exemple, d'une impulsion RZ rectangulaire de durée égale à un demi temps bit avec une équiprobabilité de « 1 » et de « 0 » cette tension serait: (3/4 VA+1/4 VB).

Il est donc connu que les modulateurs sont affectés de dérives lentes qui se traduisent par une translation de la caractéristique de la figure 1 parallèlement à l'axe horizontal. Les causes de ces dérives sont diverses et dépendent de la technologie du modulateur utilisé. Pour les modulateurs utilisant le niobate de lithium, les dérives proviennent principalement des variations de température, des charges piégées dans les diélectriques d'isolement des électrodes et, à forte injection optique, d'effets photoréfractifs.

La tension de polarisation doit être asservie de telle sorte que le signal de commande électrique soit constamment positionné de façon optimale par rapport à la caractéristique réelle.

Différentes solutions ont étés proposées pour résoudre ce problème de l'asservissement de la tension de polarisation.

Une première méthode connue consiste à superposer à la tension de polarisation un signal sinusoïdal de faible amplitude, de fréquence f, située en dessous du spectre utile du signal d'information. En sortie du modulateur, une partie du signal optique est prélevée par un coupleur et reconverti en électrique au moyen d'un photodétecteur. On analyse ensuite la composante à la fréquence 2f dans le signal détecté. Si le modulateur est polarisé au centre de la caractéristique (point optimum pour le cas d'un signal NRZ) cette composante est nulle car il s'agit d'un point d'inflexion. Sinon, la non-linéarité de la caractéristique crée une composante à cette fréquence. Le principe de l'asservissement est donc d'annuler la composante à la fréquence 2f. Cette méthode présente le défaut principal de ne pouvoir être appliquée que pour le format NRZ.

Une autre solution proposée (brevet US 4 306 142 de 1981) consiste à utiliser un coupleur qui prélève une partie du signal optique en entrée du modulateur et un second coupleur sur la sortie. Les signaux sont convertis en électrique par des photo-détecteurs et analysés par un système électronique comportant notamment des détecteurs de rapport cyclique (un signal RZ équiprobable où l'impulsion dure un demi temps bit a un rapport cyclique de 1/4). Le principe de l'asservissement est d'assurer l'égalité des rapports cycliques en entrée et en sortie. Ce principe peut être utilisé quelque soit le format du signal, il présente néanmoins l'inconvénient principal d'être coûteux dans sa réalisation pour une application en transmission haut débit : les photo-détecteurs et les détecteurs de rapport cyclique sont, en effet, des circuits qui doivent fonctionner au débit de l'information, ce qui, à 10 Gbit/s, nécessite l'utilisation d'une technologie coûteuse.

Une autre solution, également applicable indépendamment du format, a été proposée dans le document US 5 805 328. Dans ce cas, deux coupleurs et deux photo-détecteurs sont utilisés pour mesurer les puissances optiques moyennes en entrée et en sortie du modulateur. Le principe de l'asservissement consiste ensuite à maintenir constant le rapport de ces deux puissances. Les grandeurs mesurées sont ici des valeurs moyennes et les composants utilisés sont donc d'une technologie peu coûteuse. Les inconvénients de ce procédé sont d'une part l'utilisation de deux coupleurs qui provoquent des pertes de puissance optique et d'autre part le fait que cet asservissement risque d'être mis en défaut dans le cas notamment où le signal d'information voit son amplitude crête à crête descendre en dessous de Vpi (cas d'une légère perte de performance du driver). Dans ce cas en effet, pour compenser la diminution de la puissance de sortie, l'asservissement tendra à augmenter la puissance dans les « 0 » optiques ce qui dégradera rapidement les performances du système. On peut noter d'autre part que l'asservissement est potentiellement imprécis car il dépend d'un rapport de deux grandeurs mesurées, les imprécisions de la mesure et les variations de l'électronique de mesure en fonction de la température ou du vieillissement des composants affecteront donc le comportement d'ensemble de cet asservissement.

Les asservissements reposant sur un signal qui a une raison physique de s'annuler au point de fonctionnement optimal ne sont pas sujets à cette critique.

On a également proposé, dans le document US 3 579 145, un procédé de stabilisation de modulateur optique dans lequel on positionne un signal de référence en superposant une perturbation sur un minimum de la caractéristique du modulateur et en recherchant un effet aussi faible que possible de cette perturbation sur le signal de sortie du modulateur. Toutefois, ce procédé ne permet pas de régler l'amplitude du signal de référence.

La présente invention a pour but un procédé et un dispositif d'asservissement de la tension de polarisation d'un modulateur électro-optique présentant les caractéristiques :
- d'être utilisable pour des signaux de format RZ et également pour des signaux de format NRZ,
- d'être de mise en oeuvre peu coûteuse car pouvant être réalisé avec seulement des composants opto-électroniques « basse fréquence »,
- de reposer sur l'annulation d'une tension d'erreur et donc peu sensible aux erreurs de mesure,
- d'assurer un bon taux d'extinction du signal optique modulé.

Plus généralement l'invention a pour but un procédé et un dispositif permettant de régler la position et l'amplitude d'un signal de commande d'un modulateur optique.

Ce but est atteint selon l'invention grâce à un procédé de positionnement d'un signal électrique de commande d'un modulateur électro-optique par rapport à la caractéristique du modulateur, dans lequel on superpose au signal de commande un signal de perturbation et on règle le positionnement du signal de commande en fonction de la valeur d'une composante du signal de sortie du modulateur correspondant à la perturbation introduite, dans lequel procédé on superpose la perturbation au signal de commande lorsque celui-ci prend une valeur devant correspondre à un point de pente minimale de la caractéristique, et on règle le positionnement du signal de commande de façon à minimiser l'amplitude de la perturbation de sortie due à cette perturbation du signal de commande, caractérisé en ce que la caractéristique du modulateur comporte un deuxième point à pente minimale correspondant à un deuxième niveau de commande, en ce que l'on applique une deuxième perturbation au signal de commande lorsque celui-ci se trouve à ce deuxième niveau de commande, et en ce que l'on règle à la fois le positionnement du signal de commande et l'amplitude du signal de commande de façon à minimiser chacune des deux perturbations de sortie dues respectivement aux perturbations appliquées au premier et au deuxième niveau de commande.

Ce but est également atteint grâce à un dispositif formant source optique, comprenant un émetteur optique et un modulateur électro-optique, comprenant également des moyens pour superposer au signal de commande du modulateur un signal de perturbation, des moyens de prélèvement d'un signal lumineux en sortie du modulateur et des moyens pour régler le positionnement du signal de commande par rapport à la caractéristique du modulateur en fonction de la valeur d'une composante du signal de sortie du modulateur correspondant à la perturbation introduite, le dispositif comportant des moyens pour superposer la perturbation au signal de commande lorsque celui-ci doit se trouver en un point de tangente minimale de la caractéristique, et les moyens de réglage de positionnement sont prévus pour régler le positionnement du signal de commande de manière à minimiser l'amplitude de la perturbation de sortie du modulateur due à cette perturbation superposée au signal de commande, caractérisé en ce que le modulateur est tel que sa caractéristique comporte un deuxième point à pente minimale correspondant à un deuxième niveau de commande, et en ce que le dispositif comporte des moyens pour appliquer une deuxième perturbation au signal de commande lorsque celui-ci se trouve à ce deuxième niveau de commande, et des moyens pour régler à la fois le positionnement du signal de commande et l'amplitude du signal de commande de façon à minimiser chacune des deux perturbations de sortie dues respectivement aux perturbations appliquées au premier et au deuxième niveau de commande.

L'objet de l'invention permet en outre, selon un mode de réalisation particulier, d'asservir le gain du driver de modulateur. On utilise alors avantageusement un composant supplémentaire haute fréquence.

D'autres caractéristiques, buts et avantages de l'invention apparaîtront mieux à la lecture de la description détaillée faite en référence aux figures annexées sur lesquelles :
- la figure 1 représente la caractéristique d'un modulateur électro-optique classique ;
- la figure 2 est un schéma fonctionnel représentatif d'un montage de modulateur de type classique ;
- la figure 3 représente un signal de type NRZ et un signal de type RZ correspondant ;
- la figure 4 est un schéma de montage d'un dispositif à modulation optique asservie;
- la figure 5 bis est un tracé représentant un signal sinusoïdal utilisé pour produire un signal de perturbation et un signal d'information sur lequel doit être superposée la perturbation ;
- la figure 6 est un tracé représentant ce même signal sinusoïdal et le signal de perturbation généré ;
- la figure 7 est un tracé représentant le signal d'information et le signal de perturbation généré ;
- la figure 8 est un schéma de montage d'un module apte à superposer à un signal de commande d'un modulateur un signal de perturbation;
- la figure 9 représente un schéma de montage d'un module apte à superposer deux signaux de perturbation à des valeurs choisies d'un signal de commande de modulateur, conforme à l'invention.

Tel que représenté sur la figure 4, le dispositif présente un modulateur électro-optique 5 qui reçoit par un guide L1 une onde optique provenant d'une source continue non représentée (typiquement une diode laser), et fournit sur un guide de sortie L2 une onde optique modulée.

Le modulateur 5 présente en outre deux entrées de commande 21 et 22, l'entrée 21 recevant un signal électrique de commande et l'entrée 22 recevant la tension de polarisation. Les entrées 21 et 22 sont en pratique formées par les extrémités d'une même électrode de commande du modulateur 5.

Sur le guide de sortie L2 est disposé un coupleur 6 qui prélève une faible partie de la puissance optique de sortie du modulateur 5, laissant la plus grande partie de la puissance disponible sur un guide L3, pour l'utilisation principale.

Ce signal prélevé en sortie du modulateur 5 est traité dans une branche d'asservissement 20 bouclée sur l'entrée de commande 22 du modulateur. La branche 20 traite le signal prélevé, en déduit la tension de polarisation à appliquer au modulateur 5 et applique la valeur ainsi déduite sur l'entrée de commande 22.

Entre une entrée 21 du modulateur 5 et une entrée de commande 11 du dispositif d'ensemble est placé un ensemble de prétraitement qui applique au signal S1 arrivant sur l'entrée 11 un signal perturbateur dont les effets en sortie du modulateur 5 seront analysés par la branche 20 pour ajuster la tension de polarisation. Cet ensemble de prétraitement transforme de plus le signal S1 pour le faire passer du signal NRZ au signal RZ.

Un signal électrique de modulation S1 arrivant sur l'entrée 11 représente les données en format NRZ. Une porte ET 1 reçoit sur une première entrée le signal S1 et sur une seconde entrée un signal d'horloge à fréquence choisie pour que cette porte ET 1 découpe le signal de données en un signal RZ.

Le signal est à ce stade à un niveau usuel de 1V crête à crête. Il est ensuite amplifié par un amplificateur (ou driver) 3 qui fournit un signal S₁bis à un niveau de 6V crête à crête environ, niveau généralement requis pour attaquer les modulateurs actuels.

En sortie de ce driver 3 est placé un sommateur 4 qui reçoit sur une première entrée le signal S₁bis et sur une deuxième entrée un signal perturbateur S2bis.

Le signal perturbateur S2bis est obtenu au moyen d'une porte NON-OU 2 qui reçoit sur une de ses entrées le signal d'information S1 et, sur son autre entrée, un signal sinusoïdal S₂ de fréquence f, choisie ici en dessous du spectre de modulation utile du signal d'information S1 (f est de l'ordre de 50 KHz par exemple).

On a représenté sur les figures 5 à 7 les signaux S1, S2 et S2bis par l'action de la porte NON-OU 2, lorsque le signal d'information S1 vaut « 1 », le signal perturbateur S2bis vaut « 0 ». Lorsque le signal d'information S1 vaut « 0 », le signal perturbateur S2bis, en sortie de la porte NON OU, vaut soit « 0 » soit « 1 » selon que l'on est respectivement dans l'alternance positive ou négative de la sinusoïde S₂ de fréquence f.

Ce signal perturbateur S2bis est ensuite additionné au signal d'information S1bis transformé au format RZ et amplifié par le driver 3, au moyen du sommateur pondéré 4.

Le signal perturbateur S2bis est injecté avec un coefficient de l'ordre de 1/20, le coefficient affecté au signal S1bis étant proche de l'unité, de sorte que l'amplitude du signal perturbateur S2bis est vingt fois plus petite que celle du signal d'informations S1bis en entrée du sommateur 4. Sur la figure 7, on a représenté le signal S₂bis avec un rapport de 1/4 par rapport au signal S₁bis par souci de clarté.

Le signal obtenu après sommation est ensuite injecté sur l'extrémité 21 de l'électrode de commande du modulateur 5 à travers une capacité de couplage 23 et une ligne de transmission basse impédance, (généralement 50 Ohm ou 25 Ohm).

L'autre extrémité 22 de l'électrode est reliée à un té de polarisation 13 qui permet d'injecter une tension continue ou lentement variable qui est la tension de polarisation du modulateur 5 et qui permet également d'adapter la ligne de transmission au moyen d'une charge 14.

Comme décrit précédemment, une partie de la puissance de sortie du modulateur 5 est prélevée par un coupleur 6 et envoyée par l'intérmédiaire d'un guide L4 sur un photo-détecteur 7 qui transforme le signal lumineux en signal électrique. Le signal de sortie du photodétecteur 7 est amplifié par un amplificateur 8.

On effectue ensuite une détection synchrone de la composante de ce signal électrique à la fréquence f au moyen d'un multiplieur 9 qui reçoit sur sa première entrée le signal de sortie de l'amplificateur, et sur sa deuxième entrée la sinusoïde perturbatrice S2 d'origine.

On obtient donc en sortie de ce multiplieur 9 la somme d'une tension continue et d'une tension sinusoïdale à la fréquence 2f. La tension continue a une valeur proportionnelle à l'amplitude de la composante à la fréquence f en sortie du modulateur 5, et un signe qui dépend de la différence entre la phase de la composante de fréquence f en sortie et la phase du signal sinusoïdal S₂.

Un filtre passe bas 10 permet d'éliminer la composante à la fréquence 2f en sortie du multiplieur 9, et on obtient donc en sortie du filtre 10 une tension continue.

Le signal perturbateur S2 ayant une amplitude faible et ce signal n'étant appliqué que sur le point A de la caractéristique où la tangente est horizontale, les variations obtenues en sortie du modulateur 5 sont quasiment nulles si le signal perturbateur S2bis est bien centré sur ce point A à tangente nulle, c'est à dire si le niveau 0 du signal de commande S1bis est bien à la tension où la caractéristique atteint son minimum.

Par contre, si le niveau correspondant à la valeur 0 en entrée du modulateur 5 se trouve décalé par rapport au point A de la caractéristique, ces perturbations sont alors appliquées sur une partie de la caractéristique voisine du point A, à pente non-nulle, et donc ces perturbations sont transmises en sortie du modulateur 5. Les perturbations sont d'autant plus amplifiées que le décalage entre le niveau « 0» du signal de commande et le point A de la caractéristique est grand, du fait que la pente de la caractéristique croît en éloignement du point A.

L'amplitude de la tension continue en sortie du filtre 10 est donc sensiblement proportionnelle à l'écart entre le niveau « 0 » idéal (point A) et le niveau « 0 » réel du signal de commande.

En outre, selon que la tension de niveau « 0 » est située à droite ou à gauche du point A, la caractéristique est croissante ou décroissante de sorte que la composante à la fréquence f dans le signal détecté est affectée d'une phase négative ou positive par rapport à la phase du signal S₂., ce qui se traduit par un signe respectivement positif ou négatif de la tension continue en sortie de filtres. On identifie donc, à l'aide de ce signal continu, le signe du décalage pour déterminer une direction de correction en vue de faire converger la tension correspondant au niveau 0 vers le point d'ordonnée minimale de la caractéristique.

Selon que la tension de polarisation est située à droite ou à gauche du point A, la composante à la fréquence f dans le signal détecté sera affectée d'une phase ou de la phase opposée, ce qui permet d'obtenir le signe de la tension d'erreur et d'assurer la convergence de l'asservissement.

Cette tension continue indicative de l'amplitude et du sens de l'écart entre le niveau de tension d'entrée du point « 0 » et la tension de la caractéristique correspondant à son minimum de puissance est transmise en entrée d'un comparateur-intégrateur 11 dont la sortie délivre la tension de polarisation à appliquer pour annuler cette tension d'erreur est appliquée sur l'entrée 22 du modulateur 5 par l'intermédiaire d'un limiteur 12.

Il faut remarquer que l'asservissement pourrait converger vers tout point de la caractéristique présentant une tangente horizontale. Si la caractéristique sinusoïdale de la figure 1 présente un autre minimum en C, équivalent à A en termes de fonctionnement du modulateur 5, le point B formant maximum entre les autres points doit être évité pour la tension de commande « 0 » car le signal optique serait alors inversé. Ce problème est ici réglé en disposant le limiteur de tension 12 entre l'intégrateur 11 et l'entrée 22, qui confine la tension de polarisation dans une zone de largeur inférieure à Vpi dans laquelle il ne trouve qu'un point de fonctionnement correct et aucun point incorrect. Compte tenu des caractéristiques des modulateurs actuels, cette limitation n'est pas une difficulté.

L'asservissement proposé dans cet exemple a pour principe de maintenir le niveau des « 0 » optiques du signal modulé à leur valeur minimum. En se référant à la figure 1 on voit donc que la tension de polarisation doit permettre de positionner le niveau « 0 » du signal électrique de commande à la tension VA. Si le signal de sortie du driver 3 a l'amplitude crête à crête requise Vpi, le niveau « 1 » sera VB.

On superpose donc ici au signal électrique de modulation un signal perturbateur de faible amplitude obtenu à partir d'un signal sinusoïdal basse fréquence, ce signal perturbateur ayant la particularité essentielle de n'affecter que les « 0 » électriques. En sortie du modulateur 5, on détecte la fréquence perturbatrice avec un procédé sensible à la phase.

Le fonctionnement repose ici sur le fait que la perturbation à la fréquence f n'affecte qu'un niveau de commande correspondant à un point de tangente nulle. Annuler cette composante en sortie de modulateur revient donc ici à positionner les « 0 » électriques au point A de la caractéristique du modulateur qui présente une tangente horizontale.

Ce résultat est acquis quelque soit le format du signal de modulation.

Dans le dispositif de la figure 4, le seul composant haute fréquence requis est la porte NON-OU 2 utilisée pour générer le signal perturbateur S2bis.

Grâce au dispositif représenté à la figure 8, on peut éviter tout composant haute fréquence dans un tel dispositif d'asservissement. Le signal sinusoïdal S2 de fréquence f est ici directement injecté en série avec une tension d'alimentation négative de la porte ET 1 utilisée pour obtenir le signal de format RZ dans l'exemple précédent.

On injecte ce signal au moyen d'un réseau passif de résistances R1 et R2 et d'un condensateur C. Le réseau reçoit sur une de ses entrées une tension sinusoïdale basse fréquence et sur l'autre de ses entrées une tension négative.

Les circuits logiques rapides tel que celui formant ici la porte ET 1 ont la propriété fréquente d'avoir un niveau logique bas dépendant de la tension d'alimentation négative alors que le niveau logique haut n'en dépend pas, du moins pour des faibles variations.

La disposition représentée sur la figure 8 permet donc d'obtenir en sortie de la porte ET un signal dans lequel les niveaux « 1 » sont parfaitement stables alors que les niveaux «0 » sont perturbés par la sinusoïde de fréquence f. Ce signal est donc bien équivalent au signal obtenu en sortie du sommateur 4 de la figure 4.

Un inconvénient possible dans ce mode de réalisation serait que la perturbation soit atténuée par le fait que le driver fonctionne dans un régime de saturation, mais l'expérience montre que la saturation n'est jamais parfaite et la perturbation subsiste.

Dans le cas d'un signal de format NRZ, les schémas des figures 4 et 8 restent valides, à condition de ne plus injecter l'horloge sur la deuxième entrée de la porte ET1. La porte peut d'ailleurs être supprimée dans le cas de la figure 4.

L'asservissement convergera vers un point de polarisation assurant un taux d'extinction optimum. Dans le cas usuel où la tension appliquée sur le modulateur 5 est d'amplitude crête à crête égale à Vpi, on obtiendra un signal optimum. Si le signal de modulation est d'amplitude plus faible, le signal optique obtenu sera affecté d'une distorsion de largeur et de niveau.

La figure 9 représente un mode de réalisation de l'invention. On superpose au signal de commande un premier signal perturbateur lorsque le signal de commande est au niveau 0, et un second signal perturbateur lorsque le signal de commande est au niveau 1, ces deux signaux perturbateurs ayant des fréquences différentes f₁ et f₂.

Un fonctionnement optimum du modulateur 5 imposant que les niveaux de commande « 0 » et « 1 » soient respectivement situés en A et B sur sa caractéristique, points ou la tangente de la caractéristique est horizontale, un asservissement annulant les composantes à f₁ et à f₂ en sortie résultant des perturbations en entrée permet donc d'obtenir les meilleures performances.

L'annulation de la composante à la fréquence f₁, correspondant au positionnement de la tension de commande « 0 » sur la tension de minimum A de la caractéristique, se fera comme précédemment en ajustant la tension de polarisation. L'annulation de la composante f₂, correspondant de la même façon à un calage de la tension de commande « 1 » sur le maximum B de la caractéristique, se fera en ajustant le gain du driver 3 grâce à une tension de commande de gain, le plus souvent disponible sur ce type de composant.

On met donc en place dans un tel dispositif deux boucles d'asservissement, l'une commandant la tension de polarisation à partir de la détection à f₁, l'autre la largeur de la plage de tension à partir de la détection à f₂.

La perturbation de fréquence f₁ est obtenue comme précédemment par l'intermédiaire d'une porte ET 1 et d'une porte NON-OU 2. La perturbation de fréquence f₂ affectant les « 1» est obtenue en utilisant une seconde porte NON-OU 15 qui reçoit sur une de ses entrées la sinusoïde à la fréquence f₂ et sur son autre entrée le signal disponible sur une sortie inversée de la première porte ET 1 de sorte que le signal de fréquence f₂ n'est superposé au signal d'entrée du modulateur 5 que lorsque le signal de commande est au niveau « 1 ». Les trois signaux sont ensuite additionnés par le sommateur 4.

## Revendications

1. Procédé de positionnement d'un signal électrique de commande (S₁,S₁bis) d'un modulateur électro-optique (5) par rapport à la caractéristique (VA, VB) du modulateur (5), dans lequel on superpose au signal de commande (S1, S1bis) un signal de perturbation (S2, S2bis) et on règle le positionnement du signal de commande (S1, S1bis) en fonction de la valeur d'une composante du signal de sortie du modulateur (5) correspondant à la perturbation introduite (S2, S2bis), dans lequel procédé on superpose la perturbation (S2, S2bis) au signal de commande (S1, S1bis) lorsque celui-ci prend une valeur (VA) devant correspondre à un point (A) de pente minimale de la caractéristique, et on règle le positionnement du signal de commande (S1, S1bis) de façon à minimiser l'amplitude de la perturbation de sortie due à cette perturbation du signal de commande (S1, S1bis), **caractérisé en ce que** la caractéristique du modulateur (5) comporte un deuxième point (B) à pente minimale correspondant à un deuxième niveau de commande (VB), **en ce que** l'on applique une deuxième perturbation (f2) au signal de commande (S1, S1bis) lorsque celui-ci se trouve à ce deuxième niveau de commande (VB), et **en ce que** l'on règle à la fois le positionnement du signal de commande (S1, S1bis) et l'amplitude (VPI) du signal de commande (S1, S1bis) de façon à minimiser chacune des deux perturbations de sortie dues respectivement aux perturbations appliquées au premier (VA) et au deuxième niveau (VB) de commande.

2. Procédé selon la revendication 1, **caractérisé en ce que** les deux perturbations (f1, f2) correspondant aux premier et deuxième niveau (VA, VB) sont des signaux alternatifs ayant des fréquences différentes (f₁, f₂).

3. Procédé selon l'une des revendications 1 ou 2, **caractérisé en ce qu'**une au moins desdites perturbations superposées au signal de commande est superposée au signal de commande uniquement lorsque celui-ci prend ladite valeur correspondant audit point de pente minimal correspondant de la caractéristique.

4. Procédé selon l'une quelconque des revendications précédentes, **caractérisé en ce que** l'un au moins des points à pente minimale (A, B) de la caractéristique est un point de tangente nulle et **en ce que** l'on règle le positionnement du signal de commande (S1, S1bis) pour annuler la perturbation de sortie due à la perturbation superposée en entrée (S2, S2bis) correspondant à ce point.

5. Procédé selon l'une quelconque des revendications précédentes, **caractérisé en ce que** l'une au moins desdites perturbations (S2, S2bis) superposées au signal de commande (S1, S1bis) est un signal alternatif (S2) de fréquence choisie (f1, f2) et **en ce que** l'on minimise l'amplitude de la composante du signal de sortie ayant cette fréquence choisie (f1, f2).

6. Procédé selon l'une quelconque des revendications précédentes, **caractérisé en ce que** la fréquence (f1, f2) d'une au moins des perturbations choisies est choisie faible par rapport à la fréquence utile du signal de commande (S1, S1bis).

7. Procédé selon l'une quelconque des revendications précédentes, **caractérisé en ce que** l'une au moins des perturbations (S2, S2bis) superposées au signal de commande (S1, S1bis) est d'amplitude faible par rapport à l'amplitude du signal de commande (S1, S1bis).

8. Procédé selon l'une quelconque des revendications précédentes, en combinaison avec la revendication 5, **caractérisé en ce que** l'on multiplie le signal de sortie par un signal alternatif (S2) à la même fréquence qu'un des signaux de perturbation (S2, S2bis) superposés au signal de commande (S1, S1bis) pour obtenir un signal continu dont la valeur est représentative de l'amplitude de la perturbation en sortie due à la perturbation (S2, S2bis) superposée en entrée.

9. Procédé selon l'une quelconque des revendications précédentes, en combinaison avec la revendication 4, **caractérisé en ce qu'**un des points (A, B) de la caractéristique à pente minimale est un minimum ou un maximum de la caractéristique et **en ce qu'**on détecte un écart de phase entre la perturbation d'entrée (S2, S2bis) et la perturbation de sortie pour en déduire le sens de l'éventuel décalage de positionnement entre ce point de la caractéristique (A, B) à pente minimale et la valeur (VA, VB) du signal de commande (S1, S1bis) à laquelle est superposée la perturbation d'entrée (S2, S2bis).

10. Procédé selon la revendication 8, **caractérisé en ce que** l'on règle le positionnement du signal de commande (S1, S1bis) de façon à annuler la valeur d'une intégrale dudit signal continu de sortie.

11. Procédé selon l'une quelconque des revendications précédentes, **caractérisé en ce que** l'on superpose un des deux signaux de perturbation (S2, S2bis) sur une borne d'alimentation d'un circuit logique qui reçoit sur une de ses deux entrées un signal de commande (S1, S1bis) de la modulation.

12. Dispositif formant source optique, comprenant un émetteur optique et un modulateur électro-optique (5), comprenant également des moyens (1, 2, 3, 4) pour superposer au signal de commande (S1, S1bis) du modulateur (5) un signal de perturbation (S2, S2bis), des moyens de prélèvement (6) d'un signal lumineux en sortie du modulateur (5) et des moyens pour régler le positionnement du signal de commande (S1, S1bis) par rapport à la caractéristique du modulateur (5) en fonction de la valeur d'une composante du signal de sortie du modulateur (5) correspondant à la perturbation (S2, S2bis) introduite, le dispositif comportant des moyens (1, 2, 3, 4) pour superposer la perturbation (S2, S2bis) au signal de commande (S1. S1bis) lorsque celui-ci doit se trouver en un point de tangente minimale (A, B) de la caractéristique, et les moyens de réglage de positionnement (20) sont prévus pour régler le positionnement du signal de commande (S1, S1bis) de manière à minimiser l'amplitude de la perturbation de sortie du modulateur (5) due à cette perturbation (S2, S2bis) superposée au signal de commande (S1, S1bis), **caractérisé en ce que** le modulateur (5) est tel que sa caractéristique comporte un deuxième point à pente minimale correspondant à un deuxième niveau de commande, et **en ce que** le dispositif comporte des moyens (1, 2, 3, 4) pour appliquer une deuxième perturbation au signal de commande lorsque celui-ci se trouve à ce deuxième niveau de commande, et des moyens pour régler à la fois le positionnement du signal de commande et l'amplitude du signal de commande de façon à minimiser chacune des deux perturbations de sortie dues respectivement aux perturbations appliquées au premier et au deuxième niveau de commande.

13. Dispositif selon la revendication 12, **caractérisé en ce que** les deux perturbations (f1, f2) correspondant aux premier et deuxième niveau (VA, VB) sont des signaux alternatifs ayant des fréquences différentes (f₁, f₂).

14. Dispositif selon la revendication 12, **caractérisé en ce que** les moyens (1, 2, 3, 4) pour superposer l'une au moins desdites perturbations (S2, S2bis) au signal de commande (S1, S1bis) sont prévus pour ne superposer cette perturbation que dans le cas où le signal d'entrée est à un dit niveau (A, B) prévu pour correspondre à un minimum de pente de la caractéristique.

15. Dispositif selon la revendication 14, **caractérisé en ce que** ledit au moins un signal de perturbation (S2, S2bis) est un signal (S2) alternatif à fréquence faible (f1, f2) par rapport aux fréquences utiles du signal de commande (S1, S1bis), **en ce que** le dispositif comporte un module (2) recevant le signal de commande sur une de ses entrées et un signal alternatif (52) sur l'autre de ses entrées et délivrant un signal (S2bis) prenant la valeur :
- « 0 » lorsque le signal de commande (S1, S1bis) est à un niveau différent du niveau (A, B) auquel doit être superposée la perturbation,
- « 0 » ou « 1 » lorsque le signal de commande (S1, S1bis) est au niveau de commande (A, B) auquel doit être superposée la perturbation (S2, S2bis), selon que le signal alternatif est positif ou négatif ;
et **en ce que** le dispositif comporte des moyens pour additionner le signal de sortie de ce module (S2bis) au signal de commande (S1, S1bis).

## Claims

1. Method for positioning an electric control signal (S₁, S₁bis) of an electrooptical modulator (5) with respect to the characteristic (VA, VB) of the modulator (5) in which a disturbing signal (S2, S2bis) is superimposed on the control signal (S1, S1bis) and the positioning of the control signal (S1, S1bis) is adjusted as a function of the value of a component of the output signal from the modulator (5) corresponding to the disturbance introduced (S2, S2bis), in which method the disturbance (S2, S2bis) is superimposed on the control signal (S1, S1bis) when the latter takes a value (VA) which must correspond to a point (A) of minimum slope of the characteristic, and the positioning of the control signal (S1, S1bis) is adjusted in such a way as to minimize the amplitude of the output disturbance due to this disturbance of the control signal (S1, S1bis), **characterized in that** the characteristic of the modulator (5) comprises a second point (B) of minimum slope corresponding to a second control level (VB), **in that** a second disturbance (f2) is applied to the control signal (S1, S1bis) when the latter is at this second control level (VB), and **in that** both the positioning of the control signal (S1, S1bis) and the amplitude (VPI) of the control signal (S1, S1bis) are adjusted in such a way as to minimize each of the two output disturbances due respectively to the disturbances applied to the first (VA) and to the second (VB) control level.

2. Method according to Claim 1, **characterized in that** the two disturbances (f1, f2) corresponding to the first and second level (VA, VB) are alternating signals having different frequencies (f₁, f₂)

3. Method according to one of Claims 1 or 2, **characterized in that** at least one of said disturbances superimposed on the control signal is superimposed on the control signal solely when the latter takes said value corresponding to said corresponding point of minimum slope of the characteristic.

4. Method according to any one of the preceding claims, **characterized in that** at least one of the points of minimum slope (A, B) of the characteristic is a point of zero tangent and **in that** the positioning of the control signal (S1, S1bis) is adjusted so as to cancel the output disturbance due to the disturbance superimposed at the input (S2, S2bis) corresponding to this point.

5. Method according to any one of the preceding claims, **characterized in that** at least one of said disturbances (S2, S2bis) superimposed on the control signal (S1, S1bis) is an alternating signal (S2) of chosen frequency (f1, f2) and **in that** the amplitude of the component of the output signal having this chosen frequency (f1, f2) is minimized.

6. Method according to any one of the preceding claims, **characterized in that** the frequency (f1, f2) of at least one of the chosen disturbances is chosen small with respect to the useful frequency of the control signal (S1, S1bis).

7. Method according to any one of the preceding claims, **characterized in that** at least one of the disturbances (S2, S2bis) superimposed on the control signal (S1, S1bis) is of small amplitude in comparison to the amplitude of the control signal (S1, S1bis).

8. Method according to any one of the preceding claims, in combination with Claim 5, **characterized in that** the output signal is multiplied by an alternating signal (S2) at the same frequency as one of the disturbing signals (S2, S2bis) superimposed on the control signal (S1, S1bis) so as to obtain a continuous signal whose value is representative of the amplitude of the disturbance at the output due to the disturbance (S2, S2bis) superimposed at the input.

9. Method according to any one of the preceding claims, in combination with Claim 4, **characterized in that** one of the points (A, B) of the characteristic of minimum slope is a minimum or a maximum of the characteristic and **in that** a phase discrepancy between the input disturbance (S2, S2bis) and the output disturbance is detected so as to deduce therefrom the direction of any shift in positioning between this point of the characteristic (A, B) of minimum slope and the value (VA, VB) of the control signal (S1, S1bis) on which the input disturbance (S2, S2bis) is superimposed.

10. Method according to Claim 8, **characterized in that** the positioning of the control signal (S1, S1bis) is adjusted in such a way as to cancel the value of an integral of said continuous output signal.

11. Method according to any one of the preceding claims, **characterized in that** one of the two disturbing signals (S2, S2bis) is superimposed on a supply terminal of a logic circuit which receives a modulation control signal (S1, S1bis) on one of its two inputs.

12. Device forming an optical source, comprising an optical emitter and an electrooptical modulator (5), also comprising means (1, 2, 3, 4) for superimposing a disturbing signal (S2, S2bis) on the control signal (S1, S1bis) of the modulator (5), means (6) for extracting a light signal at the output of the modulator (5) and means for adjusting the positioning of the control signal (S1, S1bis) with respect to the characteristic of the modulator (5) as a function of the value of a component of the output signal from the modulator (5) corresponding to the disturbance (S2, S2bis) introduced, the device comprising means (1, 2, 3, 4) for superimposing the disturbance (S2, S2bis) on the control signal (S1, S1bis) when the latter has to lie at a point of minimum tangent (A, B) of the characteristic, and the means for adjusting positioning (20) are designed to adjust the positioning of the control signal (S1, S1bis) in such a way as to minimize the amplitude of the output disturbance of the modulator (5) due to this disturbance (S2, S2bis) superimposed on the control signal (S1, S1bis), **characterized in that** the modulator (5) is such that its characteristic comprises a second point of minimum slope corresponding to a second control level, and **in that** the device comprises means (1, 2, 3, 4) for applying a second disturbance to the control signal when the latter is at this second control level, and means for adjusting both the positioning of the control signal and the amplitude of the control signal in such a way as to minimize each of the two output disturbances due respectively to the disturbances applied to the first and to the second control level.

13. Device according to Claim 12, **characterized in that** the two disturbances (f1, f2) corresponding to the first and second level (VA, VB) are alternating signals having different frequencies (f₁, f₂).

14. Device according to Claim 12, **characterized in that** the means (1, 2, 3, 4) for superimposing at least one of said disturbances (S2, S2bis) on the control signal (S1, S1bis) are designed to superimpose this disturbance only in the case where the input signal is at a so-called level (A, B) designed to correspond to a slope minimum of the characteristic.

15. Device according to Claim 14, **characterized in that** said at least one disturbing signal (S2, S2bis) is a signal (S2) alternating at low frequency (f1, f2) with respect to the useful frequencies of the control signal (S1, S1bis), and **in that** the device comprises a module (2) receiving the control signal on one of its inputs and an alternating signal (S2) on the other of its inputs and delivering a signal (S2bis) taking the value:
- "0" when the control signal (S1, S1bis) is at a level different from the level (A, B) on which the disturbance is to be superimposed,
- "0" or "1" when the control signal (S1, S1bis) is at the control level (A, B) on which the disturbance (S2, S2bis) is to be superimposed, depending on whether the alternating signal is positive or negative;
and **in that** the device comprises means for adding the output signal from this module (S2bis) to the control signal (S1, S1bis).

## Patentansprüche

1. Verfahren zum Positionieren eines elektrischen Steuersignals (S₁, S₁bis) eines elektro-optischen Modulators (5) bezüglich der Charakteristik (VA, VB) des Modulators (5), bei dem dem Steuersignal (S1, S1bis) ein Störsignal (S2, S2bis) überlagert wird und die Positionierung des Steuersignals (S1, S1bis) abhängig vom Wert einer Ausgangssignalkomponente des Modulators (5) gesteuert wird, die der eingeführten Störung (S2, S2bis) entspricht, wobei bei dem Verfahren die Störung (S2, S2bis) dem Steuersignal (S1, S1bis) überlagert wird, wenn dieses einen Wert (VA) annimmt, vorausentsprechend einem Punkt (A) minimaler Steigung der Charakteristik, und die Position des Steuersignals (S1, S1bis) so gesteuert wird, daß die Amplitude der aufgrund dieser Störung des Steuersignals (S1, S1bis) hervorgerufenen Ausgangsstörung minimiert wird, **dadurch gekennzeichnet, daß** die Charakteristik des Modulators (5) einen zweiten Punkt (B) minimaler Steigung aufweist, der einem zweiten Steuerniveau (VB) entspricht, und daß eine zweite Störung (f2) an das Steuersignal (S1, S2bis) angelegt wird, wenn sich dieses bei diesem zweiten Steuerniveau (VB) befindet, und daß gleichzeitig die Positionierung des Steuersignals (S1, S1bis) und die Amplitude (VPI) des Steuersignals (S1, S1bis) so gesteuert werden, daß jede der beiden aufgrund der an das erste (VA) bzw. das zweite (VB) Steuerniveau angelegten Störungen hervorgerufenen Ausgangsstörungen minimiert wird.

2. Verfahren nach Anspruch 1, **dadurch gekennzeichnet, daß** die beiden Störungen (f1, f2), die dem ersten und dem zweiten Niveau (VA, VB) entsprechen, Wechselsignale mit unterschiedlichen Frequenzen (f₁, f₂) sind.

3. Verfahren nach einem der Ansprüche 1 oder 2, **dadurch gekennzeichnet, daß** wenigstens eine der dem Steuersignal überlagerten Störungen dem Steuersignal allein überlagert wird, wenn dieses den Wert annimmt, der dem der Charakteristik entsprechenden Punkt minimaler Steigung entspricht.

4. Verfahren nach einem der vorhergehenden Ansprüche, **dadurch gekennzeichnet, daß** wenigstens einer der Punkte minimaler Steigung (A, B) der Charakteristik ein Punkt mit einer Tangente Null ist und daß die Positionierung des Steuersignals (S1, S1bis) gesteuert wird, um die Ausgangsstörung zu beseitigen, die aufgrund der diesem Punkt entsprechenden am Eingang (S2, S2bis) überlagerten Störung hervorgerufen wird.

5. Verfahren nach einem der vorhergehenden Ansprüche, **dadurch gekennzeichnet, daß** wenigstens eine der dem Steuersignal (S1, S1bis) überlagerten Störungen (S2, S2bis) ein Wechselsignal (S2) mit ausgewählter Frequenz (S1, S2) ist und daß die Amplitude der Ausgangssignalkomponente mit dieser ausgewählten Frequenz (f1, f2) minimiert wird.

6. Verfahren nach einem der vorhergehenden Ansprüche, **dadurch gekennzeichnet, daß** die Frequenz (f1, f2) von wenigstens einer der ausgewählten Störungen klein gegenüber der Nutzfrequenz des Steuersignals (S1, S1bis) gewählt wird.

7. Verfahren nach einem der vorhergehenden Ansprüche, **dadurch gekennzeichnet, daß** wenigstens eine der dem Steuersignal (S1, S1bis) überlagerten Störungen (S2, S2bis) eine schwache Amplitude bezüglich der Amplitude des Steuersignals (S1, S1bis) hat.

8. Verfahren nach einem der vorhergehenden Ansprüche, in Kombination mit Anspruch 5, **dadurch gekennzeichnet, daß** das Ausgangssignal mit einem Wechselsignal (S2) mit der gleichen Frequenz wie der dem Steuersignal (S1, S1bis) überlagerten Störungssignale (S2, S2bis) multipliziert wird, um ein kontinuierliches Signal zu erhalten, dessen Wert die Amplitude der aufgrund der am Eingang überlagerten Störung (S2, S2bis) hervorgerufenen Ausgangsstörung darstellt.

9. Verfahren nach einem der vorhergehenden Ansprüche, in Kombination mit Anspruch 4, **dadurch gekennzeichnet, daß** einer der Punkte (A, B) der Charakteristik mit minimaler Steigung ein Minimum oder ein Maximum der Charakteristik ist, und daß eine Phasenverschiebung zwischen der Eingangsstörung (S2, S2bis) und der Ausgangsstörung erfaßt wird, um daraus die Richtung der etwaigen Positionierungsverschiebung zwischen dem Punkt der Charakteristiken (A, B) mit minimaler Steigung und dem Wert (VA, VB) des Steuersignals (S1, S1bis) abzuleiten, dem die Eingangsstörung (S2, S2bis) überlagert ist.

10. Verfahren nach Anspruch 8, **dadurch gekennzeichnet, daß** die Positionierung des Steuersignals (S1, S1bis) so gesteuert wird, daß der Wert eines Integrals des kontinuierlichen Ausgangssignals annulliert wird.

11. Verfahren nach einem der vorhergehenden Ansprüche, **dadurch gekennzeichnet, daß** eines der beiden Störsignale (S2, S2bis) einem Versorgungsanschluß einer logischen Schaltung überlagert wird, die an einem ihrer beiden Eingänge ein Steuersignal (S1, S1bis) der Modulation empfängt.

12. Eine optische Quelle bildende Vorrichtung, die einen optischen Sender und einen elektro-optischen Modulator (5) umfaßt, der gleichfalls Mittel (1, 2, 3, 4) zum Überlagern eines Störsignals (S2, S2bis) dem Steuersignal (S1, S1bis) des Modulators (5), Mittel (6) zum Entnehmen eines Lichtsignals am Ausgang des Modulators (5) und Mittel zum Steuern der Positionierung des Steuersignals (S1, S1bis) bezüglich der Charakteristik des Modulators (5) abhängig vom Wert einer Ausgangssignalkomponente des Modulators (5), die der eingeführten Störung (S2, S2bis) entspricht, umfaßt, wobei die Vorrichtung Mittel (1, 2, 3, 4) zum Überlagern der Störung (S2, S2bis) dem Steuersignal (S1, S1bis) umfaßt, wenn sich dieses an einem Punkt mit minimaler Tangente (A, B) der Charakteristik befinden soll, und die Mittel zum Steuern der Positionierung (20) vorgesehen sind zum Steuern der Positionierung des Steuersignals (S1, S1bis), derart, daß die Amplitude der aufgrund dieser dem Steuersignal (S1, S1bis) überlagerten Störung (S2, S2bis) hervorgerufenen Ausgangsstörung des Modulators (5) minimiert wird, **dadurch gekennzeichnet, daß** der Modulator (5) derart ist, daß seine Charakteristik einen zweiten Punkt minimaler Steigung aufweist, der einem zweiten Steuerniveau entspricht, und daß die Vorrichtung Mittel (1, 2, 3, 4) zum Anlegen einer zweiten Störung an das Steuersignal umfaßt, wenn sich dieses beim zweiten Steuerniveau befindet, und Mittel zum gleichzeitigen Steuern der Positionierung des Steuersignals und der Amplitude des Steuersignals, um jede der beiden Ausgangsstörungen zu minimieren, die von den an das erste bzw. das zweite Steuerniveau angelegten Störungen hervorgerufen werden.

13. Vorrichtung nach Anspruch 12, **dadurch gekennzeichnet, daß** die beiden Störungen (f1, f2), die dem ersten und dem zweiten Niveau (VA, VB) entsprechen, Wechselsignale mit unterschiedlichen Frequenzen (f₁, f₂) sind.

14. Vorrichtung nach Anspruch 12, **dadurch gekennzeichnet, daß** die Mittel (1, 2, 3, 4) zum Überlagern wenigstens einer der Störungen (S2, S2bis) dem Steuersignal (S1, S1bis) vorgesehen sind, um nur diese Störung in dem Fall zu überlagern, in dem das Eingangssignal an einem solchen vorhergesehenen besagten Niveau (A, B) ist, damit es einem Minimum der Steigung der Charakteristik entspricht.

15. Vorrichtung nach Anspruch 14, **dadurch gekennzeichnet, daß** wenigstens ein Störsignal (S2, S2bis) ein Wechselsignal (S2) mit einer bezüglich der Nutzfrequenzen des Steuersignals (S1, S1bis) geringen Frequenz (f1, f2) ist, daß die Vorrichtung ein Modul (2) umfaßt, das das Steuersignal an einem seiner Eingänge und ein Wechselsignal (S2) am anderen seiner Eingänge empfängt und ein Signal (S2bis) liefert, das die folgenden Werte annimmt:
- "0", wenn das Steuersignal (S1, S1bis) auf einem Niveau liegt, das verschieden vom Niveau (A, B) ist, an das die Störung angelegt werden soll,
- "0" oder "1", wenn das Steuersignal (S1, S1bis) auf dem Steuerniveau (A, B) ist, bei dem die Störung (S2, S2bis) überlagert werden soll, je nachdem, ob das Wechselsignal positiv oder negativ ist;
und daß die Vorrichtung Mittel zum Hinzufügen des Ausgangssignals dieses Moduls (S2bis) zum Steuersignal (S1, S1bis) umfaßt.
